Europäisches Patentamt

European Patent Office

Office européen des brevets

(19)

(11) **EP 1 198 121 A1**

(12) **EUROPÄISCHE PATENTANMELDUNG**

(43) Veröffentlichungstag:
**17.04.2002   Patentblatt 2002/16**

(51) Int Cl.[7]: **H04N 1/21**, H04N 5/217

(21) Anmeldenummer: **00122502.8**

(22) Anmeldetag: **14.10.2000**

| | |
|---|---|
| (84) Benannte Vertragsstaaten:<br>**AT BE CH CY DE DK ES FI FR GB GR IE IT LI LU MC NL PT SE**<br>Benannte Erstreckungsstaaten:<br>**AL LT LV MK RO SI** | (71) Anmelder: **Kachelriess, Marc, Dr.**<br>**90409 Nürnberg (DE)**<br><br>(72) Erfinder: **Kachelriess, Marc, Dr.**<br>**90409 Nürnberg (DE)** |

(54) **Digitalkamera mit optimierter Optik, automatischer Ausrichtung und fortschrittlicher Speichermethode**

(57)    Die Erfindung beschreibt eine Digitalkamera, die optische Fehler wie z.B. Verzerrungen bereits vor der Umwandlung der reinen Messdaten, auch Rohdaten genannt (oft rechteckige Pixel im Seitenverhältnis 4: 3), in ein Pixelbild, das im Allgemeinen auf einem anderen Raster als die Rohdaten abgetastet ist (meist quadratische Pixel auf quadratischem Gitter), korrigiert. Zusätzlich kann unter Verwendung eines einfachen Neigungsmessers optional die Ausrichtung des Bilds, also der Horizont, durch Drehungen um einen Winkel $\alpha$ (beliebig oder wahlweise ein Vielfaches von 90°) automatisch in die Waagrechte gebracht werden, um somit manuelle Nachbearbeitungsverfahren zu vermeiden bzw. das Betrachten der Bilder auf einem Monitor zu erleichtern. Sofern die Verfahren auf den auf das Kontinuum fortgesetzten Rohdaten operieren, also bevor die Abtastung des Pixelbilds geschieht, können sie dem optischen Teil der Kamera zugerechnet werden. Die Kamera besitzt somit eine optimierte Optik.

Wahlweise können die genannten Verfahren einzeln oder gesamt auch als Bildnachverarbeitungsschritt implementiert und als Applikation dem Anwender zur Verfügung gestellt werden. In diesem Fall sind jedoch durch die mehrfache Abtastung Qualitätsverluste unvermeidbar. Die Vorteile der Automatisierung bleiben dennoch erhalten. Außerdem wird ein semimanuelles Verfahren zur Ausrichtung des Bilds vorgeschlagen, um ohne Zusatzhardware wie Neigungsmesser auszukommen. Darüber hinaus wird eine Möglichkeit beschrieben, die Daten so zu speichern, dass möglichst viele Rohdaten an Stelle der Sekundärdaten auf dem Datenträger vorrätig gehalten werden.

EP 1 198 121 A1

**Beschreibung**

Definitionen, Technisches Gebiet

Die Erfindung bezieht sich auf Geräte, die eine abzubildende, typischerweise flächenhafte, also zweidimensionale, im Allgemeinen n-dimensionale Funktion durch diskrete Abtastung und nachfolgender Digitalisierung als digitales Abbild zur Verfügung stellt sowie durch geeignete Verarbeitung dessen eine Darstellung erzeugt, die zur weiteren Verwendung vorteilhaft ist (Digitalkamera). Insbesondere sind dabei Digitalkameras im optischen Bereich, die nach Farben geordnete Lichtintensitäten digitalisieren und durch Weiterverarbeitung als Pixelbild zur Verfügung stellen ("digitale Fotographie") gemeint.

- Rohdaten/Primärdaten/Primärbild: Damit werden sowohl die reinen Messdaten, als auch mögliche, auf dem Weg zum Sekundärbild entstehende Zwischendaten und Datenformate bezeichnet.

- Sekundärdaten/Sekundärbild/Sekundärformat: Dies bezeichnet das endgültige, dem Anwender zur weiteren Verarbeitung zur Verfügung gestellte Bild bzw. die entsprechenden Daten.

- Bildrekonstruktion: Dies bezeichnet die mathematische Transformation, um von den Rohdaten die Sekundärdaten zu berechnen. Die Bildrekonstruktion besteht typischerweise aus einer Abfolge von Interpolationen und Abtastungen mit oft anschließender verlustbehafteter Komprimierung. Allgemein: Die Definition beinhaltet alle Funktionale, die Primärbilder auf Sekundärbilder abbilden.

Stand der Technik, Problemstellung

Digitalkameras (im Folgenden wird auf zweidimensionale Abbildungen Bezug genommen), beispielsweise für den optischen Wellenlängenbereich, bilden typischerweise das einfallende Bild (Rohdaten) nach einigen Verarbeitungsschritten als Pixelbild ab, welches dann, nach eventueller Kompression, als Sekundärbild auf einen Datenträger geschrieben wird. Der Prozess kann wie folgt beschrieben werden: Das darzustellende Bild wird durch einen geeigneten Detektor an den Stellen $(x_n, y_n)$ für n=1...N abgetastet. N ist die physikalische Pixelzahl des Detektors; die Abtastpunkte $(x_n, y_n)$ sind meist so gewählt, dass eine bestimmte Fläche mehr oder weniger gleichmäßig abgetastet wird. Der Fall, dass das Abtastraster ein quadratisches Gitter ist, ist im Allgemeinen nicht gegeben. Oft werden aus baulichen Gründen rechteckige Gitter (beispielsweise ein Pixelseitenverhältnis von 4:3) verwendet. Außerdem existieren Kameras im optischen Bereich, die die Abtastung auf einem hexagonalen Gitter realisieren. Insbesondere für Farbaufnahmen im optischen Bereich kommt oft das so genannte "Bayer Mosaik" zur Anwendung, bei dem die Grundfarbe Grün doppelt so oft wie die Grundfarben Rot und Blau abgetastet werden. Dies entspricht dem physiologischen Sehvorgang, erfordert allerdings wegen der räumlichen Trennung der für die einzelnen Farben empfindlichen Elemente Interpolationen im Rohdatenraum. Für alle Fälle gilt jedoch, dass das gemessene Primärbild oder ein Zwischenbild, $P(x_n, y_n):=P_n$, also die Rohdaten, vor der Darstellung auf einem Monitor, vor der Belichtung auf einem Film oder vor dem Ausdruck auf einem Drucker auf ein anderes, meist quadratisches, Raster $(X_m, Y_m)$ umgerechnet wird. Der Parameter m=1...M zählt die Pixel des Sekundärbilds $S(X_m, Y_m):=S_m$. Typischerweise, aber nicht zwingend, gilt M≠N; empfehlenswert ist M≥N, um die durch die Umrechnung entstehenden Verluste klein zu halten.

Zur Umrechnung der Rohdaten $P(x_n, y_n)$ in das endgültige Raster $(X_m, Y_m)$, also zur Bildrekonstruktion, wird normalerweise eine Fortsetzung $\underline{P}(x, y)$ der Rohdaten auf das Kontinuum definiert. Dies ist eine Regel wie die Daten an Punkten, die nicht explizit gemessen wurden, zu berechnen sind. Ein einfaches Beispiel ist eine lineare Interpolation zwischen benachbarten Stützstellen $(x_n, y_n)$. Im Allgemeinen ist die Funktion $\underline{P}$ von den Paramteren $\{P_n\}$ sowie den Koordinaten der Stützstellen $\{(x_n, y_n)\}$ abhängig, also $\underline{P}(x, y)=\underline{P}(x, y, \{P_n\}, \{(x_n, y_n)\})$. Das Sekundärbild ist dann eine Abtastung der kontinuierlichen Funktion $\underline{P}$ an den gewünschten Stellen $(X_m, Y_m)$:

$$S(X_m, Y_m):= \underline{P}(X_m, Y_m).$$

Die Speicherung der Daten erfolgt meist als Speicherung der Sekundärbilder (typisches Beispiel ist die Digitalkamera im optischen Bereich, die beispielsweise Pixelbilder als TIFF oder JPEG speichert). Dies hat unter anderem folgende Gründe. Meist benötigen die Sekundärbilder weniger Speicherplatz, da sie einerseits als (eventuell verlustbehaftete) komprimierte Datei gespeichert werden und andererseits oft auch im noch unkomprimierten Zustand eine Reduktion des Rohdatenbilds (beispielsweise in Bezug auf die Anzahl der Pixel oder auf die Dynamik der einzelnen Messwerte) darstellen und somit schon dann Speicherplatz sparen. Außerdem erscheint es praktisch, die kamerainterne Umwandlung aus dem oft proprietärem Rohdatenformat in ein öffentlich bekanntes und vielseitig verwendbares Sekundärformat bereits auf der Hardwareseite, also auf der Kamera selbst, durchzuführen. Zum einen ermöglicht dies, die Daten auf Standarddatenträger zu exportieren, ohne ein spezielles Auslese- oder Konvertierungstool bereit zu stellen. Zum anderen würde eine Umwandlung erst nach Datenübertragung auf eine Auswertekonsole oder auf einen PC bei jeder Änderung der Kamerahardware ein entsprechendes Update der Computersoftware erfordern und dadurch den Entwicklungsprozess erschweren. Klarer Nachteil dieses Verfahrens: Nach Umwandlung in ein Sekundärformat werden alle folgenden Manipulationsschritte (typischerweise Interpolation gefolgt von Abtastung mit anschließender verlustbehafteter Komprimierung) die Datenqualität verschlechtern. Eine Methode, die meist unvermeidbare Umwandlung so lange herauszögern wie aus Speicherplatzgründen möglich bzw. erst bei der Übertragung der Daten auf einen Computer oder bei Herausnahme des Datenträgers zu starten, ist bisher nicht bekannt.

Die Problemstellung liegt im Wesentlichen darin, Bildfehler und andere Unzulänglichkeiten möglichst automatisch, möglichst ohne Qualitätsverlust sowie möglichst komfortabel zu korrigieren. Dies wird unter anderem durch eine Lösung des Problems der Hinauszögerung der Umwandlung in das Sekundärformat vereinfacht.

Beschreibung

Der Erfindung liegt einerseits die Idee zu Grunde, vor der Abtastung der Funktion $\underline{P}$ bzw. im Laufe der Bildrekonstruktion sinnvolle und bisher nicht vorhandene Korrekturen durchzuführen. Im Gegensatz zu einer Korrektur des Sekundärbilds treten bei einer Operation auf den (kontinuierlich fortgesetzten) Rohdaten $\underline{P}$ keine zusätzlichen Verluste in Bezug auf Ortsauflösung oder Bildqualität auf. Ein Beispiel für eine solche Korrektur ist die Rotation des Bilds um einen beliebigen Winkel $\alpha$, die in etwa so formuliert werden kann:

$$S(X_m, Y_m) := \underline{P}(X_m \cos(\alpha) + Y_m \sin(\alpha), Y_m \cos(\alpha) - X_m \sin(\alpha)).$$

Ein weiteres Beispiel ist die Korrektur von Verzerrungen oder beliebige geometrische Transformationen, beschrieben durch eine nichtlineare Abbildung $f_{xy}(x, y)$ der Ebene auf sich selbst:

$$S(X_m, Y_m) := \underline{P}(f_x(X_m, Y_m), f_y(X_m, Y_m)).$$

In diesem allgemeineren Beispiel ist das obige Beispiel der Rotation enthalten. Selbstverständlich kann eine solche Korrektur auch eine Veränderung der Werte selbst beinhalten, um beispielsweise Grauwerte oder Helligkeitswerte eines Farbbilds optimaler zu verteilen (Stichwort: Weißabgleich, Bayer Mosaik).

Voraussetzung für die genannten rohdatenbasierten Transformationen ist allerdings, dass die Transformationsparameter zum Zeitpunkt der Berechnung des Sekundärbilds bekannt sind und nicht erst danach durch einen Anwender festgelegt werden. Dies ist meist dann der Fall, wenn die langfristige Speicherung der Rohdaten, aus welchen Gründen auch immer, nicht durchgeführt wird oder werden kann und somit die Korrektur vor der Speicherung des Sekundärbilds erfolgen muss, um Verluste klein zu halten. Dementsprechend werden hier sinnvolle, bisher nicht vorhandene Transformationen vorgeschlagen, die sich insbesondere, aber nicht ausschließlich auf die Anwendung "optische Digitalkamera im Consumer- sowie Profibereich" beziehen und die automatisch oder halbautomatisch zwischen Belichtung und Berechnung des Sekundärbilds durchführbar sind. Die aufgeführten Beispiele werden sich deshalb oft auf diese Anwendung beziehen. Eine Einschränkung der Allgemeinheit wird dadurch aber nicht gegeben.

Ein Vorschlag wie die Bildrekonstruktion, also die Umwandlung der Roh- in Sekundärdaten, hinausgezögert werden kann, um dem Anwender die Möglichkeit zu geben, auch zeitlich länger zurückliegende Aufnahmen verlustfrei zu manipulieren, wird ebenfalls erörtert.

Außerdem wird die Idee beansprucht, die vorgeschlagenen Transformationen bildbasiert, d.h. auf dem Sekundärbild operierend zu realisieren, um so den gleichen Automatisierungsgrad zu erreichen.

Die Erfindung beinhaltet keinen Anspruch auf die Algorithmen im Besonderen. Beispielsweise sind Rotationsalgorithmen, Entzerrungsalgorithmen und viele andere Bildbearbeitungsmethoden ausführlichst in der Literatur beschrieben. Hier empfiehlt sich insbesondere ein Blick auf die medizinische Bildgebung, die besonders hohe Qualitätsstandards erfüllt, nicht zuletzt weil der Gesetzgeber entsprechende Maßnahmen zwingend vorschreibt (z.B. Lehmann, Gönner, Spitzer. *Survey: Interpolation Methods in Medical Image Processing.* IEEE Trans. Med. Imag. 18(11): 1049-1075, 1999).

**Optische und farbliche Verzerrung:**

Optische Systeme weisen, nicht zuletzt aus Kostengründen, oft Unzulänglichkeiten auf, die sich als Verzerrung des Bilds oder als Farbverschiebung (bzw. Grauwertverschiebung, allgemein Messwertfehler) bemerkbar macht.

Meist sind diese Fehler reproduzierbar und demnach entsprechend der obigen Beispiele korrigierbar. Bei Digitalkameras ist beispielsweise aufgrund der oft kleinen Abmessungen der Optik, eine tonnen- oder kissenförmige Verzerrung in Abhängigkeit von der Brennweite, der Blendeneinstellung und der Fokussierung (drei bekannte Parameter) zu beobachten. Durch einfache Kalibriermessungen in Abhängigkeit der genannten drei Parameter kann eine Entzerrungsfunktion $f_{xy}(x, y)$ berechnet (wie aus der Literatur bekannt) und entsprechend obigen Transformationsmodells in die Kamera integriert werden. Da dies vor der Speicherung des eigentlichen Bilds (Sekundärbild) geschieht, kann der Prozess dem optischen System zugeordnet werden und muss nicht als Bildnachverarbeitung, die im Allgemeinen (nicht ganz unberechtigt) einen bildverschlechternden Ruf im Sinne einer "kosmetischen Korrektur" hat, deklariert werden.

**Automatische Ausrichtung des Bilds:**

Insbesondere im Bereich der optischen Fotographie ist es aus ästhetischen Gründen oft erwünscht, dass das Bild exakt horizontal/vertikal ausgerichtet ist. Eine Vorrichtung, die auch bei Schräglage der Kamera eine automatische Korrektur vornimmt, existiert bisher nicht. Deshalb wird vorgeschlagen, einen Neigungsmesser oder ein äquivalentes Bauteil in die Kamera zu integrieren und den so gemessenen Kippwinkel $\alpha$ durch eine Rotation des Bilds um -$\alpha$ vor der Abtastung des Sekundärbilds zu korrigieren. Die Optik des bildgebenden Systems würde somit über eine automatische Ausrichtung verfügen. Alternativ dazu kann der Messwert $\alpha$ als Zusatzinformation mit dem Sekundärbild gespeichert werden und zu einer nachträglichen Rotation in der Bildnachverarbeitung herangezogen werden. Da Neigungsmesser Standardbauteile darstellen und zudem zu niedrigen Preisen erhältlich sind sowie kleine Abmessungen besitzen, scheint die Aufrüstung auch kleiner Kameras durchaus möglich und sinnvoll. Eine Methode, Bilder halbautomatisch ohne Verwendung dieses Bauteils zu korrigieren, wird weiter unten beschrieben. Die Ausrichtung auf andere Vorzugsvektoren (beispielsweise auf Magnetfeldlinien) kann analog durch Einbau entsprechender Sensoren (z.B. Gradientensensor für Magnetfelder) erfolgen.

**Automatische Kippung des Bilds um Vielfache von 90°:**

Das hier vorgeschlagene Verfahren basiert ebenfalls auf der Verwendung einer Messapparatur, die die Richtung eines Vorzugsvektors bestimmt (z.B. Neigungsmesser). Im Gegensatz zur Drehung um allgemeine Winkel wird hier der Kippwinkel $\alpha$ auf das nächste Vielfache von 90° gerundet und das Bild dementsprechend korrigiert. Da eine Rotation um Vielfache von 90° im Falle eines rechteckigen Gitters des Sekundärbilds einer einfachen Vertauschung der Pixel entspricht, kann der entsprechende Schritt sowohl im Rohdatenraum, als auch als Operation auf dem Sekundärbild implementiert werden. Enorme Vorteile werden auch hier wieder beim Beispiel Digitalkamera im optischen Bereich sichtbar: Moderne Kameras speichern typischerweise größenordnungsmäßig $10^2$ bis $10^3$ Bilder. Im Mittel sind mindestens 50% der Aufnahmen nach Drehung der Kamera um $\pm$90° (Rechts- und Linkshänder) oder um 180° erfolgt, je nachdem ob Portrait- oder Landschaftsausrichtung gewünscht war. Nach der Übertragung der Bilder auf einen Computer müssen vor einer möglichen Präsentation, also etwa 50% der Aufnahmen, manuell (!) vom Anwender in die richtige Lage gedreht werden. Dies verlangt theoretisch mindestens eine Interaktion pro Bild, meist per Mausklick. Obwohl selbst dies einen erheblich störenden Faktor darstellt, erfordern die meisten gängigen Applikationen zur Bildnachverarbeitung (sei es eine unabhängige Anwendung oder die mit der Kamera als Zubehör gelieferte Software) größenordnungsmäßig 5-10 Interaktionen pro Bild (Doppelklick zur Auswahl des Bilds, Befehl zur Rotation, Befehl zum Abspeichern, Bestätigung des Namens, Bestätigung des Überschreibens des Originalbilds, Schließen des Fensters). Die vorgeschlagene Methode würde also eine erhebliche Komfortsteigerung für den Anwender bedeuten. Für den häufigen Fall, dass die Bilder mit einer "lossy compression", also mit einer verlustbehafteten Kompressionsmethode gespeichert werden, bedeutet jedes Öffnen und Wiederabspeichern des Bilds zusätzliche Qualitätseinbußen, auch bei einer einfachen 90° Rotation, die im Prinzip nur einen Austausch der Pixel darstellt. Auch dies könnte durch eine Automatisierung der 90° Rotation bei Operation auf den Rohdaten verhindert werden. Die Anforderungen an die Präzision der Messapparatur (z.B. Neigungsmesser) sind im Vergleich zur allgemeinen Drehung deutlich geringer.

**Halbautomatische Ausrichtung des Bilds:**

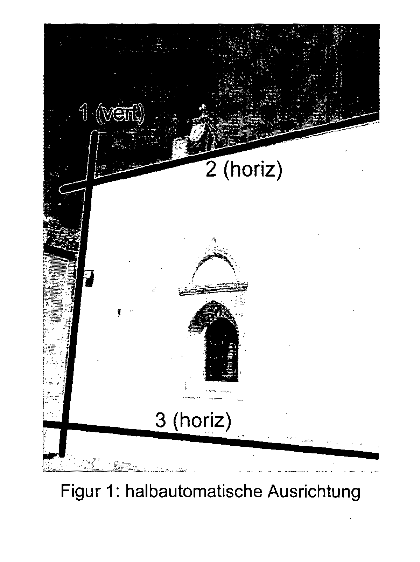

Das hier vorgeschlagene Verfahren basiert auf einer automatischen Kantendetektion in den gemessenen Rohdaten oder im Sekundärbild gefolgt von einer manuellen Auswahl derjenigen Kante, die zur Ausrichtung (Rotation) des Bilds verwendet werden soll. Geeignete Verfahren zur Kantendetektion sind aus der Literatur bekannt und nicht Gegenstand dieser Erfindung. Ein Beispiel zur Kantendetektion ist die so genannte "Hough-Transformation" eines Bilds, die zusätzlich zur Detektion von Linien (oder anderen Kurven) auch eine Quantifizierung ihrer "Stärke", d.h. ihrer Dominanz im Bild, vornimmt. Ein Beispiel ist in Figur 1 gezeigt: Der Algorithmus detektiert eine vertikale sowie zwei horizontale Kanten und sortiert der Dominanz nach (Nummern 1 bis 3). Die Darstellung und die folgende Selektion durch den Anwender kann etwa wie folgt aussehen: Dem Anwender werden die K dominantesten Kanten (im Beispiel ist K=3) präsentiert. Die erste, also die dominanteste, kann beispielsweise durch Blinken, Marching Ants oder Ähnlichem hervorgehoben werden. Möglicherweise per Knopfdruck (an der Kamera) oder per Mausklick (auf der Auswertekonsole oder dem Computer) wird dann die Hervorhebung zyklisch von Kante zu Kante permutiert, bis der Anwender durch Drücken eines weiteren Knopfs oder durch Anklicken eines Auswahlfelds bestätigt, dass die aktuell hervorgehobene Kante zur Ausrichtung des Bilds verwendet werden soll. Andere Auswahlmöglichkeiten wie die direkte Anwahl per Mausklick sind auch denkbar. Nach erfolgter Selektion einer Kante wird das Bild so rotiert, dass die gewählte Kante vertikal oder horizontal zu liegen kommt und zwar so, dass der Rotationswinkel $\alpha$ betragsmäßig kleiner als 45° ist. Auch hier gilt, dass die Rotation im Rohdatenraum einer Bildnachbearbeitung aus qualitativen Gründen zu bevorzugen ist. Außer der rein vertikalen oder horizontalen Vorzugsrichtung sind andere Vorzugsrichtungen denkbar.

**Fortschrittliche Speicherung:**

Die Umwandlung der Rohdaten in sekundäre Bilddaten (Bildrekonstruktion) ist im Allgemeinen durch nötige Interpolationen oder komplizierte Transformationen mit anschließender diskreter Abtastung verlustbehaftet. Dennoch ist sie unvermeidbar, um das entstehende Datenmaterial allgemein zugänglich zu machen oder um den benötigten Speicherplatz zu reduzieren. Wie beschrieben, ist es in den häufigsten Fällen von Interesse, zusätzliche Transformationen (z.B. Rotation, perspektivische Entzerrungen etc.) auf das Bild anzuwenden. Meist ist dies nur als Operation auf dem Sekundärbild möglich, da die Rohdaten nicht auf externe Medien exportiert werden können. Insbesondere bei der oben beschriebenen, halbautomatischen Ausrichtung des Bilds erscheint es interessant, dies nicht unmittelbar nach der Aufnahme, sondern zeitlich versetzt vornehmen zu können. Sofern die Rohdaten nicht exportiert werden können oder sollen, muss dies auf der Kamera selbst geschehen. Deshalb wird hier vorgeschlagen, die Datenspeicherung so zu optimieren, dass die Umwandlung der Rohdaten in Sekundärbilder so lange wie möglich herausgezögert wird. Dies kann wie folgt erreicht werden: Neu aufgenommene Bilder können zuerst als Rohdaten gespeichert werden. Bei zunehmender Speicherplatzknappheit können dann die im Rohdatenformat abgespeicherten Bilder in das weniger Speicherplatz benötigende Sekundärformat umgewandelt werden. Die neu aufgenommenen Daten können dann, je nach Speicherplatz, vorzugsweise als Rohdaten oder auch als Sekundärdaten im Speicher abgelegt werden. Damit werden möglichst viele und möglichst aktuelle Aufnahmen im primären Datenformat im Speicher gehalten. Dies ermöglicht verlustfreie Manipulationen wie die genannte Rotation, die nachträgliche Veränderung der Empfindlichkeit (bei optischen Kameras auch die ASA-Zahl genannt, entspricht oft einer Dynamikwandlung von Detektordynamik auf die typischerweise 8 Bit pro Farbkanal im Farbbild) oder der Messwertkorrektur (z.B. Weißabgleich). Sollen Rohdaten, aus welchen Gründen auch immer, nicht exportiert werden und sind zum Zeitpunkt der Exportierung der Daten nicht alle Datensätze im Sekundärformat, so können spätestens dann die verbleibenden Rohdaten in Sekundärdaten umgerechnet werden. Dies kann zum Beispiel bei Beginn der Datenübertragung zu einem Computer oder bei Auswurf des Datenträgers aus der Kamera geschehen. Hier sei explizit darauf hingewiesen, dass der Vorschlag auch die Möglichkeit beinhaltet, ein Zwischenformat zu berechnen und dessen weitere Umwandlung in das Sekundärbild so lange wie möglich hinauszuzögern. Dies kann zum Beispiel sinnvoll sein, wenn eine Dynamikumwandlung oder eine Vorverarbeitung des Bayer Mosaiks stets automatisch erfolgt, aber die Möglichkeit zur halbautomatischen verlustfreien Rotation auch zu späteren Zeitpunkten möglich sein soll.

**Patentansprüche**

1.   Digitalkamera (Kamera sowie Zubehör wie z.B. Auswertesoftware) durch Verfahren **gekennzeichnet**, die, auf den Primär- oder Sekundärdaten operierend, die Bildqualität verbessern, die Ausrichtung der Bilder korrigieren sowie durch optimierte Speicherung die Möglichkeit diese Korrekturen auch zu späteren Zeitpunkten verlustfrei auszuführen beinhalten.

2.   Digitalkamera nach Anspruch 1, **dadurch gekennzeichnet, dass** sie *vor* Abtastung des Sekundärbilds automatisch oder halbautomatisch Transformationen der Messdaten oder einem geeigneten Zwischenformat (beides Rohdaten genannt) durchführen kann, welche somit dem optischen System (Optik) zugerechnet werden dürfen und auch den Anwenderkomfort steigern.

3.   Digitalkamera nach Anspruch 2, **dadurch gekennzeichnet, dass** bauliche und physikalische Unzulänglichkeiten in der Optik durch einen kalibrierbaren Entzerrungsalgorithmus bzw. Messwertkorrekturalgorithmus behoben werden (optimierte Optik).

4.   Digitalkamera nach Anspruch 2, **dadurch gekennzeichnet, dass** sie durch ein zusätzliches Messgerät zur Bestimmung eines Vorzugsvektors (z.B. Neigungsmesser, Magnetfeldmesser) verfügt und eine rohdatenbasierte automatische Ausrichtung durch eine freie Rotation des Rohdatenbildes um einen Winkel α ermöglicht.

5. Digitalkamera nach Anspruch 4, **dadurch gekennzeichnet, dass** sie Rotationen ausschließlich um ganzzahlige Vielfache eines Winkels (beispielsweise 90°) durchführt, um die Bilder bereits bei der ersten Begutachtung in der korrekten Lage zu präsentieren und damit dem Anwender eine manuelle Rotation von typischerweise 50% aller Bilder erspart.

6. Digitalkamera nach Anspruch 2, **dadurch gekennzeichnet, dass** sie auf den Rohdaten eine Kantendetektion oder eine Detektion anderer zur Ausrichtung geeigneter Strukturen durchführt, die gefundenen Kanten oder anderen Strukturen dem Anwender zur Auswahl präsentiert und nach erfolgter Auswahl das gesamte Bild so rotiert, dass die Kanten oder anderen Strukturen in einer Vorzugsrichtung zu liegen kommen.

7. Digitalkamera nach Anspruch 1, **dadurch gekennzeichnet, dass** sie *nach* Abtastung des Sekundärbilds im Rahmen der Bildnachverarbeitung automatisch oder halbautomatisch Transformationen der Messdaten (Rohdaten) durchführen kann und somit den Anwenderkomfort signifikant steigert.

8. Digitalkamera nach Anspruch 7, **dadurch gekennzeichnet, dass** bauliche und physikalische Unzulänglichkeiten in der Optik durch einen kalibrierbaren Entzerrungsalgorithmus bzw. Messwertkorrekturalgorithmus im Rahmen der Bildnachverarbeitung, welche Kenntnis der Entzerrungsfunktion in Abhängigkeit der Messparameter (z.B. Spektrum, Blende, Brennweite) haben sollte, behoben werden.

9. Digitalkamera nach Anspruch 7, **dadurch gekennzeichnet, dass** sie durch ein zusätzliches Messgerät zur Bestimmung eines Vorzugsvektors (z.B. Neigungsmesser, Magnetfeldmesser) verfügt und mit den Sekundärbildern Information über die Kameraneigung (Rotationswinkel) mit abspeichert und somit eine bildbasierte, automatische Ausrichtung durch eine freie Rotation um einen Winkel α ermöglicht.

10. Digitalkamera nach Anspruch 9, **dadurch gekennzeichnet, dass** sie den gemessenen Winkel α dazu verwendet, während der Datenübertragung von der Kamera auf die Auswertekonsole oder den Computer oder zu anderen geeigneten Zeitpunkten eine Rotation um Vielfache von 90° durchzuführen, um die Bilder bereits bei der ersten Begutachtung in der korrekten Lage zu präsentieren und dem Anwender eine manuelle Rotation von typischerweise 50% aller Bilder erspart.

11. Digitalkamera nach Anspruch 7, **dadurch gekennzeichnet, dass** sie auf dem Sekundärbild eine Kantendetektion oder eine Detektion anderer zur Ausrichtung geeigneter Strukturen durchführt, die gefundenen Kanten oder anderen Strukturen dem Anwender zur Auswahl präsentiert und nach erfolgter Auswahl das gesamte Bild so rotiert, dass die Kanten oder anderen Strukturen in einer Vorzugsrichtung zu liegen kommen.

12. Digitalkamera nach Anspruch 1, **dadurch gekennzeichnet, dass** sie auf Grund des noch verfügbaren Speicherplatzes entscheidet, ob eine (zu bevorzugende) Speicherung der Rohdaten möglich ist, ob die Daten wegen Speicherplatzmangels als (meist weniger Speicherplatz belegendes) Sekundärbild gespeichert werden oder ob freier Speicherplatz durch die sukzessive und automatische Umwandlung schon gespeicherter Rohdaten in Sekundärdaten zur Verfügung gestellt werden muss.

Figur 1: halbautomatische Ausrichtung

| Europäisches Patentamt | EUROPÄISCHER RECHERCHENBERICHT | Nummer der Anmeldung EP 00 12 2502 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 1 028 595 A (TEXAS INSTRUMENTS INC) 16. August 2000 (2000-08-16) * Seite 2, Zeile 39 - Seite 5, Zeile 27 * * Abbildung 3 * --- | 1-3 | H04N1/21 H04N5/217 |
| A | US 5 528 293 A (WATANABE MIKIO) 18. Juni 1996 (1996-06-18) * Spalte 1, Zeile 66 - Spalte 3, Zeile 17 * * Spalte 4, Zeile 53 - Spalte 6, Zeile 10 * * Spalte 6, Zeile 47 - Spalte 7, Zeile 67 * --- | 1,7,12 | |
| A | US 5 402 171 A (MOROHOSHI TOSHIHIRO ET AL) 28. März 1995 (1995-03-28) * Spalte 7, Zeile 42 - Spalte 8, Zeile 4 * * Spalte 29, Zeile 55 - Spalte 31, Zeile 52 * --- | 1,12 | |
| A | PATENT ABSTRACTS OF JAPAN vol. 1999, no. 13, 30. November 1999 (1999-11-30) & JP 11 225283 A (HEWLETT PACKARD CO &LT;HP&GT;), 17. August 1999 (1999-08-17) * Zusammenfassung * --- | 1,4,7,9 | **RECHERCHIERTE SACHGEBIETE (Int.Cl.7)** H04N G06T |
| A | DE 197 20 200 A (SONY CORP) 20. November 1997 (1997-11-20) * Spalte 19, Zeile 29 - Spalte 27, Zeile 53 * --- | 1,4,5,7, 9,10 | |
| A | PATENT ABSTRACTS OF JAPAN vol. 1996, no. 07, 31. Juli 1996 (1996-07-31) & JP 08 065457 A (HITACHI LTD), 8. März 1996 (1996-03-08) * Zusammenfassung * --- -/-- | 6,11 | |

Der vorliegende Recherchenbericht wurde für alle Patentansprüche erstellt

| Recherchenort DEN HAAG | Abschlußdatum der Recherche 7. März 2001 | Prüfer Wentzel, J |

**Europäisches Patentamt**

# EUROPÄISCHER RECHERCHENBERICHT

Nummer der Anmeldung

EP 00 12 2502

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 748 326 A (LOVE STEPHEN JOHN ET AL) 5. Mai 1998 (1998-05-05) ----- | | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| DEN HAAG | 7. März 2001 | Wentzel, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**    EP 00 12 2502

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-03-2001

| Im Recherchenbericht angeführtes Patentdokument | | Datum der Veröffentlichung | Mitglied(er) der Patentfamilie | | Datum der Veröffentlichung |
|---|---|---|---|---|---|
| EP 1028595 | A | 16-08-2000 | JP | 2000244936 A | 08-09-2000 |
| US 5528293 | A | 18-06-1996 | JP | 7274108 A | 20-10-1995 |
| US 5402171 | A | 28-03-1995 | JP | 2635917 B | 30-07-1997 |
|  |  |  | JP | 6225317 A | 12-08-1994 |
| JP 11225283 | A | 17-08-1999 | KEINE | | |
| DE 19720200 | A | 20-11-1997 | JP | 9307803 A | 28-11-1997 |
|  |  |  | JP | 9307804 A | 28-11-1997 |
|  |  |  | CN | 1170307 A | 14-01-1998 |
| JP 08065457 | A | 08-03-1996 | KEINE | | |
| US 5748326 | A | 05-05-1998 | AU | 1298595 A | 27-06-1995 |
|  |  |  | CA | 2190781 A | 15-06-1995 |
|  |  |  | GB | 2298333 A,B | 28-08-1996 |
|  |  |  | GB | 2320158 A,B | 10-06-1998 |
|  |  |  | WO | 9516323 A | 15-06-1995 |

EPO FORM P0461

Für nähere Einzelheiten zu diesem Anhang : siehe Amtsblatt des Europäischen Patentamts, Nr.12/82